# EUROPEAN PATENT APPLICATION

(11) **EP 3 806 490 A1**
(43) Date of publication of application: **14.04.2021**
(21) Application number: 19874877.4
(22) Date of filing: 28.06.2019
(51) Int. Cl.: H04R 5/02, H04R 3/00, B60R 11/02

(54) **VEHICLE SOUND SYSTEM AND AUDIO PLAYBACK METHOD**

(30) Priority: 25.10.2018 CN 201811252082
(71) Applicant: Guangzhou Xiaopeng Motors Technology Co., Ltd., Guangzhou, Guangdong 510000 (CN)
(72) Inventor: YU, Hao, Guangzhou, Guangdong 510000 (CN)
(74) Representative: Lin Chien, Mon-Yin
(86) International application number: PCT/CN2019/093427
(87) International publication number: WO 2020/082772

(57) **Abstract**

A vehicle sound system and an audio playback method. The method is applied to a vehicle sound system. The system comprises a preset number of loudspeakers. Positions of the preset number of loudspeakers are all oriented toward the same seat position on a vehicle. The method comprises: controlling a first number of loudspeakers to play human voice signals of an identifiable human voice frequency band, wherein the first number of loudspeakers are provided at the middle of the vehicle, and voice generating directions are toward a vehicle door of the vehicle; and controlling a second number of loudspeakers to play full-frequency-band audio signals, wherein the sum of the first number and the second number is the preset number. By implementing embodiments of the present invention, human voice positioning deviation felt by a passenger can be reduced, and a good sound field effect is created for passengers.

## Description

### TECHNICAL FIELD

The disclosure relates to audio processing technologies, and more particularly, to a vehicle sound system and an audio play method.

### BACKGROUND

When passengers listen to music in a vehicle, because distances and angles between each loudspeaker in the vehicle and the corresponding passenger are different, sound intervals for sound signals played by each loudspeaker to reach the passengers' ears are different, accordingly. A position of a formed sound field tends to deviate from one side of the passenger, and the passenger may feel a distortion of the sound field. Generally, when sound signals including human voice are played, the passengers' auditory experience tends to be negatively affected, if a voice position ofthe human voice felt by the passengers is deviated (e.g., the passengers hear singing from a lateral side of a door of the vehicle).

### SUMMARY

Embodiments of the disclosure provides a vehicle sound system and an audio play method. A sound deviation of human voice tends to be reduced, and a sound field effect tends to be created for passengers.

In a first aspect, an audio play method is provided. The method is applied to a vehicle sound system. The system includes a predetermined number of loudspeakers, and each loudspeaker of the predetermined number of loudspeakers is oriented towards a seat of the vehicle. The method comprises:

controlling a first number of loudspeakers, from the predetermined number of loudspeakers, to play human voice signals of a recognizable human voice frequency range, the first number of loudspeakers being arranged at a middle portion of the vehicle while sound directions of the first number of loudspeakers being oriented toward a door of the vehicle; and

controlling a second number of loudspeakers, from the predetermined number of loudspeakers, to play audio signals in a full frequency range, wherein a sum of the first number andthe second number is the predetermined number.

As an optional implementation manner, in the first aspect of the embodiments of the disclosure, the predetermined number of loudspeakers are symmetrically arranged about the seat and are spaced from the seat with a same distance.

As an optional implementation manner, in the first aspect of the embodiments of the disclosure, controlling a first number of loudspeakers to play voice signals comprises:

filtering the audio signals in the full frequency range with the recognizable human voice frequency range, thereby obtaining the human voice signals; and

controlling the first number of loudspeakers to play the human voice signals.

As an optional implementation manner, in the first aspect of the embodiments of the disclosure, the method further comprises:

identifying the position of ears of a user on the seat; and

determining, according to the position of the ears, a relative distance between each of the predetermined number of loudspeakers andthe position of the ears; and

adjusting, according to the relative distance, an amplitude of the audio signals and the human voice signals, in frequency domain, thereby enabling the audio signals and the human voice signals to have a same volume when reaching the ears of the user.

As an optional implementation manner, in the first aspect of the embodiments of the disclosure, identifying the position of ears of the user on the seat comprises:

controlling a camera to capture a face image of the user on the seat, and identifying the position of the ears according to the face image.

In a second aspect, a vehicle sound system is provided. The system comprises:

a predetermined number of loudspeakers, each of the predetermined number of loudspeakers being oriented toward a seat of the vehicle; and

wherein the predetermined number of loudspeakers comprising a first number of loudspeakers and a second number of loudspeakers, the first number of loudspeakers are configured for playing human voice signals of a recognizable human voice frequency range, and the first number of loudspeakers are arranged at a middle portion of the vehicle while sound directions of the first number of the loudspeakers are oriented toward a door of the vehicle; and

wherein the second number of loudspeakers are configured for playing audio signals in a full frequency range, and a sum of the first number andthe second number is the predetermined number.

As an optional implementation manner, in the second aspect of the embodiments of the disclosure, the predetermined number of loudspeakers are symmetrically arranged about the seat.

As an optional implementation manner, in the second aspect of the embodiments of the disclosure, the system further comprises:

a filtering unit, configured for filtering the audio signals in the full frequency range with the recognizable human voice frequency range, thereby obtaining the human voice signals; and

wherein the first number of loudspeakers are specifically configured for playing the human voice signals.

As an optional implementation manner, in the second aspect of the embodiments of the disclosure, the system further comprises:

an ear identifying unit, configured for identifying the position of ears of a user on the seat; and

a determining unit, configured for determining, according to the position of the ears, a relative distance between each of the predetermined number of loudspeakers and the position of the ears; and

an adjusting unit, configured for adjusting, according to the relative distance, an amplitude of the audio signals and the human voice signals in frequency domain, thereby enabling the audio signals and the human voice signals to have a same volume when reaching the ears of the user.

As an optional implementation manner, in the second aspect of the embodiments of the disclosure, the ear identifying unit comprises:

a capturing subunit, configured for controlling a camera to capture a face image of the user on the seat; and

an identifying subunit, configured for identifying the position of the ears according to the face image.

Compared with the prior art, beneficial effects of the embodiments of the disclosure are as follows.

A predetermined number of loudspeakers play audio signals, and each of the loudspeakers is orientedtoward a seat of a vehicle. The predetermined number of loudspeakers include a first number of loudspeakers and a second number of loudspeakers. The first number of loudspeakers are configured to play human voice signals of a recognizable human voice frequency range. And the second number of loudspeakers are configured to play audio signals in a full frequency range. The first number of loudspeakers are arranged at a middle portion of the vehicle, and sound directions of the first number of the loudspeakers are oriented toward a door of the vehicle. A sum of the first number and the second number is the predetermined number. Because each loudspeaker is spaced from the seat with a same distance, the audio signals and the human voice signals, played by each loudspeaker, reach ears of a user at the same time. A sound deviation of human voice caused by transmitting time difference tends to be reduced. At the same time, a voice position of human voice is corrected and the sound deviation is reduced and a sound field effect is created for passengers by playing the human signals.

### BRIEF DESCRIPTION OF THE DRAWINGS

In order to more clearly illustrate the technical solutions in the embodiments of the present application, the drawings used in the description of the embodiments will be briefly described belo w. It is obvious that the drawings in the following description are just some embodiments of the disclosure. Other drawings may also be obtained from tho se of ordinary skill in the art in light of the inventive work.
FIG.1 is a schematic structural diagram of a vehicle sound system, according to an embodiment of the disclosure;
FIG.2 is a schematic top diagram of a vehicle having the vehicle sound system, according to an embodiment of the disclosure;
FIG.3 is a schematic diagram showing transmission direction of audio signals played by loudspeakers, according to an embodiment of the disclosure;
FIG.4 is a schematic top diagram of a sound field formed around a driver's seat, according to an embodiment of the disclosure;
FIG.5 is a schematic top diagram of a sound field formed around a right front passenger's seat, according to an embodiment of the disclosure;
FIG.6 is a schematic top diagram of a sound field formed around a left rear passenger's seat, according to an embodiment of the disclosure;
FIG.7 is a schematic top diagram of a sound field formed around a right rear passenger's seat, according to an embodiment of the disclosure;
FIG.8 is a schematic top diagram of a sound field formed around a middle rear passenger's seat, according to an embodiment of the disclosure;
FIG.9 is a flow chart of an audio play method, according to an embodiment of the disclosure;
FIG.10 is a flow chart of an audio play method, according to another embodiment of the disclosure;
FIG.11 is a schematic structural diagram of a vehicle sound system, according to another embodiment of the disclosure.

### DETAILED DESCRIPTION OF PREFERRED EMBODIMENTS

The technical solution in the embodiments of the disclosure will be described clearly and completely accompanying with drawings of embodiments of the disclosure as follows. Apparently, the described embodiments are only apart of the embodiments of the disclosure, but not all the embodiments. Based on the embodiments of the disclosure, all other embodiments achieved by those ordinarily skilled in the art without doing any creative work, should be comprised in the scope of the disclosure.

It should be noted that, in the embodiments of the disclosure and the drawings, terms, such as "upper", "lower", "left", "right", "front", "rear", "top", "bottom", "inner" " , "outer", "middle", "horizontal", "vertical", "transverse", and "longitudinal", indicate a position or a position relationship as shown in the drawings. The terms are used to describe the disclosure and the embodiments clearly, but not used to limit that devices, elements or components must have a specific orientation, or must be constructed or operated in a specific orientation.

In addition, terms, such as "first", "second", are usedto distinguish the devices, the elements or the components (the specific types and structures may be the same or different), but not used to indicate or to imply relative importance and quantities of the devices, the elements or the components. Unless otherwise indicated, "plurality" meanstwo or more.

Furthermore, terms, such as "comprising" and "having", and any variations of the terms are used to cover non-exclusive inclusion. For example, processes, methods, systems, products, or devices that comprises a series of steps or units, are not limited to listed steps or units, but optionally comprise unlisted steps or units, or optionally comprise other steps or units inherent in the processes, methods, products or devices.

The embodiments of the disclosure provide a vehicle sound system and an audio play method. Audio signals played by loudspeakers reach a seat of a vehicle at the same time. A stereo sound field effect is created for passengers. The embodiments of the disclosure is described in detail below.

In order to understand a vehicle sound system and an audio play method disclosed in the embodiments of the disclosure, the vehicle sound system and a loudspeaker layout included in the vehicle sound system is described in detail below firstly.

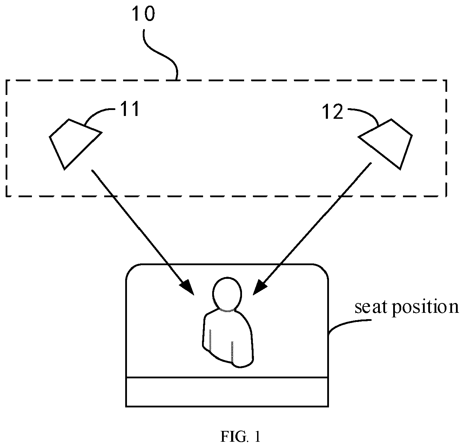

The vehicle sound system disclosed in the embodiments of the disclosure includes at least two loudspeakers. Each of the loudspeakers is oriented toward a seat of a vehicle, and is spaced from the seat with a same distance. Referring to FIG.1, FIG.1 is a schematic structural diagram of a vehicle sound system, according to an embodiment of the disclosure. As shown in FIG.1, the vehicle sound system includes a loudspeaker group 10. The loudspeaker group 10 includes a loudspeaker 11 and a loudspeaker 12. The loudspeaker 11 and the loudspeaker 12 are oriented toward the seat of the vehicle and are spaced from the seat with a same distance. In this manner, audio signals played by loudspeaker 11 and 12 reach ears of a passenger at the same time, and form a complete and independent stereo sound field in a listening area of the passenger. The vehicle sound system disclosed in the embodiments of the disclosure may include a number of loudspeaker groups as shown in FIG.1. When the loudspeaker of each loudspeaker group is spaced from the seat with a same distance, the loudspeakers of each loudspeaker group may be arranged surrounding the seat. Preferably, as shown in FIG.1, the at least two loudspeakers of each loudspeaker group may be symmetrically arranged about the seat. The loudspeaker layout is more beautiful.

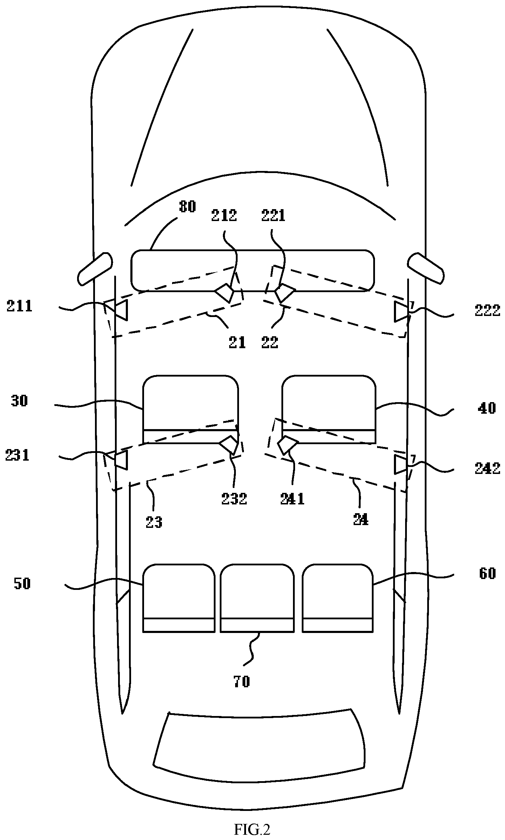

As mentioned above, the at least two loudspeakers of each loudspeaker group can create a complete and independent stereo sound field for a passenger in the vehicle. In this embodiment, the vehicle sound system in the embodiments of the disclosure can create a complete and independent stereo sound field for each passenger in the vehicle by arranging a number of loudspeaker groups. Referring to FIG.2, FIG.2 is a schematic top diagram of the vehicle having the vehicle sound system, according to an embodiment of the disclosure. As shown in FIG.2, the vehicle sound system includes a first loudspeaker group 21, a second loudspeaker group 22, athird loudspeaker group 23, and a fourth loudspeaker group 24.

In this embodiment, the first loudspeaker group 21 includes a first left front loudspeaker 211 and a second right front speaker 212. The two loudspeakers 211 and 212 included in the first loudspeaker group 21 are oriented toward a driver's seat 30 of the vehicle, and are arranged symmetrically about the driver's seat 30. The two loudspeakers of the first loudspeaker group 21 are spaced from the driver's seat 30 with a same distance.

The second loudspeaker group 22 includes a second left front loudspeaker 221 and a first right front loudspeaker 222. The two loudspeakers 221 and 222 included in the second loudspeaker group 22 are oriented toward a front passenger's seat 40 of the vehicle, and are arranged symmetrically about the front passenger's seat 40. Preferably, the two loudspeakers 221 and 222 are spaced from the front passenger's seat 40 with a same distance.

The third loudspeaker group 23 includes a first left rear loudspeaker 231 and a second right rear loudspeaker 232. The two loudspeakers 231 and 232 included in the third loudspeaker group 23 are oriented toward a left rear passenger's seat 50 of the vehicle, and are arranged symmetrically about the left rear passenger's seat 50. Preferably, the two loudspeakers 231 and 232 are spaced from the left rear passenger's seat 50 with a same distance.

The fourth loudspeaker group 24 includes a second left rear loudspeaker 241 and a first right rear loudspeaker 242. The two loudspeakers 241 and 242 included in the fourth loudspeaker group 24 are orientedtoward a right rear passenger's seat 60 of the vehicle, and are arranged symmetrically about the right rear passenger's seat 60. Preferably, the two loudspeakers 241 and 242 are spaced from the right rear passenger's seat 60 with a same distance.

It is noted that the driver's seat 30 may be defined according to actual needs, e.g., the driver's seat 30 may be located at a left side ofthe vehicle, or at a right side ofthe vehicle. As shown in FIG.2, the left rear passenger's seat 50 is located directly behind the driver's seat 30, and the right rear passenger's seat 60 is located directly behind the front passenger's seat 40. In alternative embodiments, the rear passenger's seat 50 may be located directly behind the front passenger's seat 40, and the rear passenger's seat 60 may be located directly behind_the driver's seat 30.

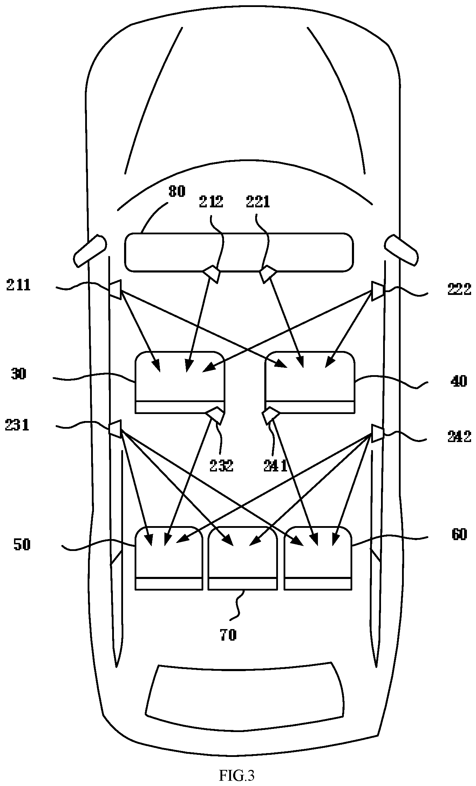

Referring to FIG.3, FIG.3 is a schematic diagram showing transmission directions of audio signals played by the loudspeakers, according to an embodiment of the disclosure. Arrows of FIG.3 show transmission directions when audio signals played by each loudspeaker transmit to a corresponding seat of the vehicle. For a passenger on the driver's seat 30, audio signals played by the first left front loudspeaker 211 and the second right front speaker 212 can reach ears of the passenger on the driver's seat 30 at the same time. A complete stereo sound field can be formed in front of the driver's seat 30. Audio signals played by the first right front loudspeaker 222 reach the ears of the passenger on the driver's seat 30 after a delay. A duration of the delay depends on a distance between the first right front loudspeaker 222 and the driver's seat 30. The duration of the delay is about 3ms. In this manner, sound heard by the passenger on the driver's seat 30 is fuller.

Accordingly, for a passenger on the right front passenger's seat 40, audio signals played by the second left front loudspeaker 221 and the first right front loudspeaker 222 can reach ears of the passenger on the right front passenger's seat 40 at the same time. A complete stereo sound field can be formed in front of the front passenger's seat 40. Audio signals played by the first left front loudspeaker 211 reach the ears of the passenger on the right front passenger's seat 40 after a delay. In this manner, sound heard by the passenger on the right front passenger's seat 40 is fuller.

For a passenger on the left rear passenger's seat 50, audio signals played by the first left rear loudspeaker 231 andthe second right rear loudspeaker 232 can reach ears of the passenger on the left rear passenger's seat 50 at the same time. A complete stereo sound field can be formed in front of the left rear passenger's seat 50. Audio signals played by the first right rear loudspeaker 242 reach the ears of the passenger on the left rear passenger's seat 50 after a delay. In this manner, sound heard by the passenger on the left rear passenger's seat 50 is fuller.

For a passenger on the right rear passenger's seat 60, audio signals played by the second left rear loudspeaker 241 andthe first right rear loudspeaker 242 can reach ears of the passenger on the right rear passenger's seat 60 at the same time. A complete stereo sound field can be formed in front of the right rear passenger's seat 60. Audio signals played by the first left rear loudspeaker 231 reach the ears ofthe passenger on the right rear passenger's seat 60 after a delay. In this manner, sound heard by the passenger on the right rear passenger's seat 60 is fuller.

In alternative embodiments, a certain type of vehicle may include three rear seats. For example, a middle rear passenger's seat 70 between the left rear passenger's seat 50 and the right rear passenger's seat 60 may be introduced, as shown in FIG. 2. Audio signals ofthe first left rear loudspeaker 231 andthe first right rear loudspeaker 242 can reach ears of a passenger at the middle rear passenger's seat 70 at the same time. Acomplete stereo sound field can be formed in front of the middle rear passenger's seat 70.

A traditional vehicle sound system (not drown) is limited by a loudspeaker layout thereof, and only provides a stereo sound field experience for a passenger on a seat (commonly known as "emperor seat"). It can be seen from the sound transmission direction shown in FIG.2, an arrangement of the loudspeakers of the vehicle sound system in this embodiment provides a stereo sound field effect for each of the passengers in the vehicle. Furthermore, a stereo sound field can be formed for the passenger on each seat, and a sound field width that can reach a width of an entire vehicle for the passengers on each seat can also be formed.

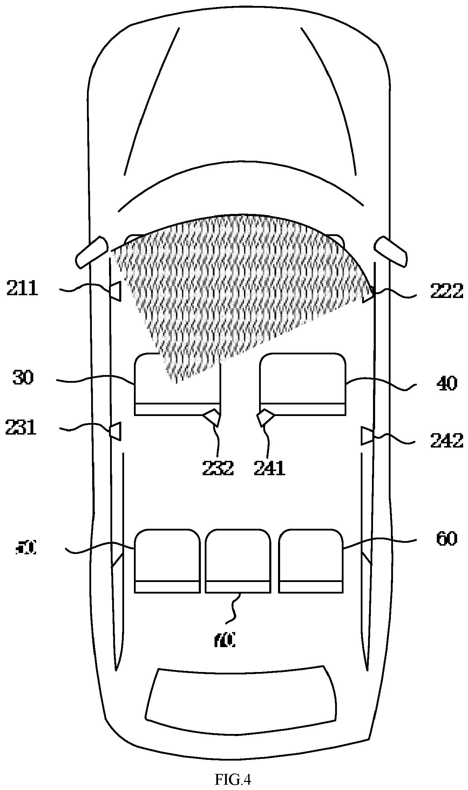

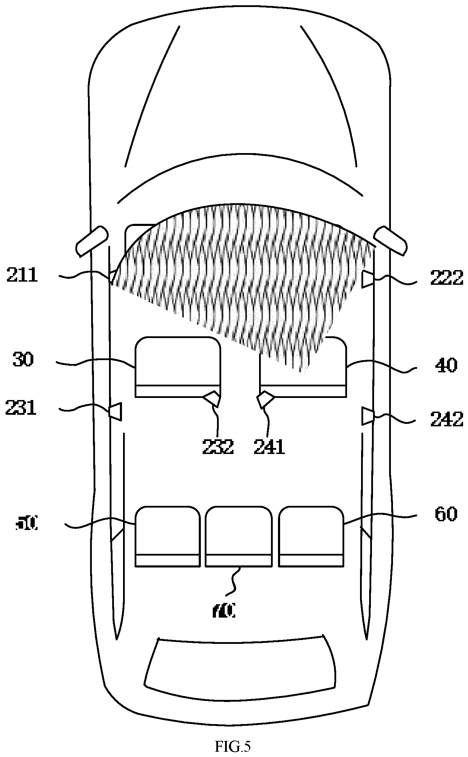

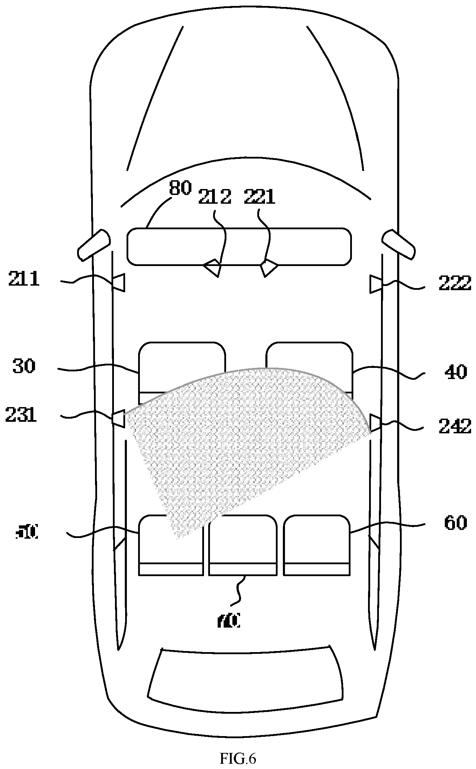

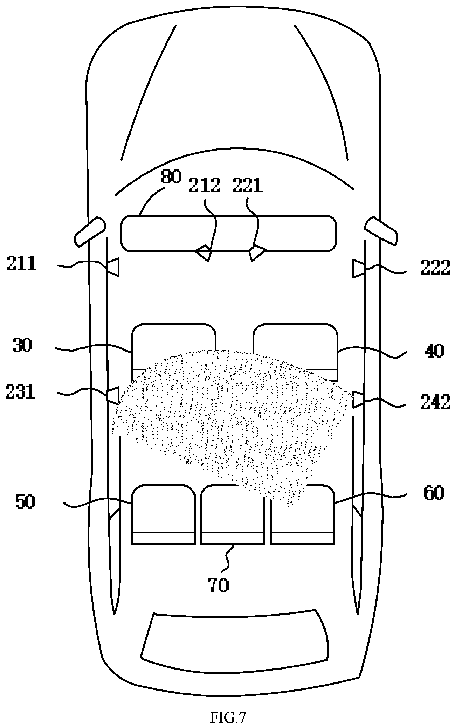

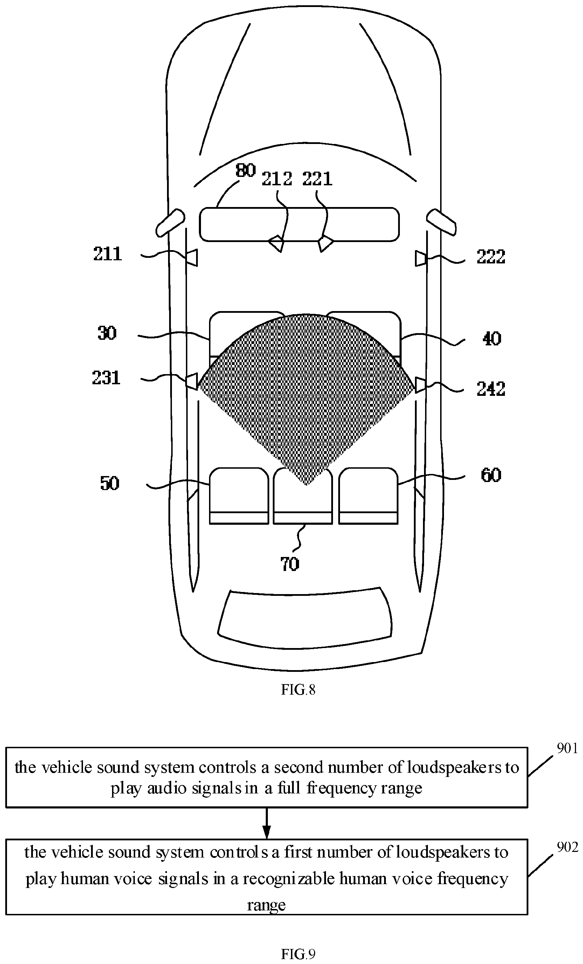

Referringto FIG.4 to FIG.8, FIG.4 is a schematic top diagram of a sound field formed around a driver's seat, according to an embodiment of the disclosure. FIG.5 is a schematic top diagram of a sound field formed around a right front passenger's seat, according to an embodiment of the disclosure. FIG.6 is a schematic top diagram of a sound field formed around a left rear passenger's seat, according to an embodiment of the disclosure. FIG.7 is a schematic top diagram of a sound field formed around a right rear passenger's seat, according to an embodiment of the disclosure. FIG.8 is a schematictop diagram of a sound field formed around a middle rear passenger's seat, according to an embodiment of the disclosure. A sound field width felt by the passenger on each seat can reach a width of an entire vehicle for the passengers on each seat can also be formed.

### First embodiment

Referring to FIG.9, FIG.9 is a flow chart of an audio play method, according to the first embodiment of the disclosure. The audio play method is applied to a vehicle sound system as shown in FIG.1 or FIG.2. The vehicle sound system includes at least two loudspeakers. The at least two loudspeakers are symmetrically arranged about a seat of a vehicle and are spaced from the seat with a same distance. The audio play method includes the following steps.

901. The vehicle sound system controls a second number of loudspeakers to play audio signals in a full frequency range.

In this embodiment, the second number of loudspeakers may be arranged at a door of the vehicle, or other positions such as A-pillar, B-pillar, C-pillar of the vehicle. In the vehicle sound system as shown in FIG.2, the second number of loudspeakers may include the first left front loudspeaker 211, the first right front loudspeaker 222, the first left rear loudspeaker 231, and the first right rear loudspeaker 242. And sound directions of the second number of loudspeakers are oriented towards a middle portion of the vehicle. The middle portion of the vehicle may include an area between a driver's seat and a front passenger's seat, and between a left rear passenger's seat and a right rear passenger's seat. The audio signals may be original sound source signals. Frequency response ranges ofthe audio signals may be in a range of 20HZ-20KHZ. And the audio signals include audio signals of a full frequency range that can be heard by human.

902.The vehicle sound system controls a first number of loudspeakers to play human voice signals in a recognizable human voice frequency range.

In this embodiment, the first number of loudspeakers are arranged at the middle portion of the vehicle, and sound directions of each loudspeaker in the first number of loudspeakers is oriented toward a corresponding door of the vehicle respectively. As shown in FIG.2, the first number of loudspeakers may include the second right front loudspeaker 212, the second left front loudspeaker 221, the second right rear loudspeaker 232, and the second left rear loudspeaker 241. A sum of the first number and the second number is a predetermined number.

The recognizable human voice frequency range may be substantially 150 HZ-800 HZ, and is in a human voice frequency range.

As shown in FIG.3, a driver's seat 30 is located at a left side of a central axis between a first left front loudspeaker 211 and a first right front loudspeaker 222. When the loudspeakers 211 and 222 play audio signals including human voice, a passenger on a driver's seat 30 may feel that the human voice deviates from one side, e.g., the first left front loudspeaker 211. In this embodiment, when a second right front loudspeaker 212 and the loudspeakers 211 and 222 play the human voice signals at the same time, a voice position of the human voice felt by the passenger is corrected. That is, the passenger feelsthat the voice position is located at the middle portion of the vehicle, or even in directly front of the passenger. In this manner, a better sound field effect can be created for the passenger. Similarly, for any seat of the vehicle, there is a corresponding loudspeaker oriented towards it, and the loudspeaker is used to play the human voice signalsto correct a sound deviation. A better sound field effect is created for each passenger in the vehicle.

As shown in the method of FIG.9, the first number of loudspeakers play the audio signals, and the second number of loudspeakers play the human voice signals. The sound deviation of the human voice felt by passengers is reduced, and the better sound field effect for the passengers is created. In addition, the sound played by loudspeaker groups reach the ears at the same time, and thus the sound deviation of the human voice felt by passengers is reduced.

### Second embodiment

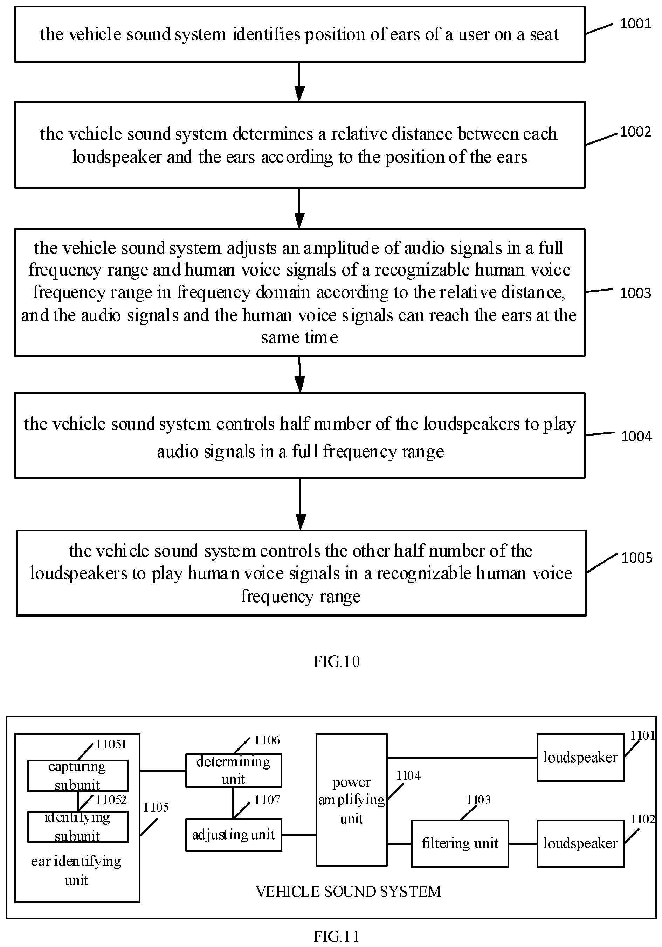

Referring to FIG.10, FIG.10 is a flow chart of an audio play method, according to another embodiment of the disclosure. The audio play method is applied to a vehicle sound system as shown in FIG.1 or FIG.2. The vehicle sound system includes at least two loudspeakers. The at least two loudspeakers are symmetrically arranged about a seat of a vehicle and are spaced from the seat with a same distance. The audio play method includes the following steps.

1001. The vehicle sound system identifies position of ears of a user on a seat.

In this embodiment, a camera may be provided and arranged in the vehicle. A camera hole ofthe camera is oriented towards the seat. The camera can capture a face image of the passenger on the seat. The vehicle sound system controls the camera to capture the face image, and identifies the po sition of the ears according to the face image.

1002. The vehicle sound system determines a relative distance between each loudspeaker and the ears according to the po sition ofthe ears.

In this embodiment, as shown in FIG.2, a layout position of each loudspeaker is fixed, and can be detected. After determining the position of the ears according to the face image, the relative distance between each loudspeaker and the ears can be determined.

1003. The vehicle sound system adjusts an amplitude of audio signals in a full frequency range and human voice signals of a recognizable human voice frequency range in frequency domain according to the relative distance, and the audio signals and the human voice signals can reach the ears at the same time.

In this embodiment, in addition to considering an influence of time on the sound field effect when sound reaches the ears, influence of volume on the sound field effect may also be considered. In application, the sound attenuates during a sound transmission process. Degree of attenuation is related to a transmission distance of the sound. When the transmission distance doubles, the volume heard by human attenuates by 6dB. If a volume attenuation in the transmission process is not compensated, the audio signals and the human voice signals heard by a user are different. Therefore, a voice position of the human voice deviates from the user. In this embodiment, steps 1001 to 1003 are introduced to create a better sound field effect for the user by determining the relative distance between each loudspeaker and the ears, and by adjusting the volume of the audio signals and the human voice signals when the audio signals and the human voice signals reach the ears.

1004. The vehicle sound system controls half number of the loudspeakers to play audio signals in a full frequency range.

1005. The vehicle sound system controls the other half number of the loudspeakers to play human voice signals of a recognizable human voice frequency range.

In this embodiment, the other half number of the loudspeakers may be arranged at the middle portion of the vehicle, and sound directions of the other half number of the loudspeakers are oriented towards doors of the vehicle. In addition, the audio signals and the human voice signals may be independent audio signals. As an optional manner, the human voice signals can be obtained by filtering audio signals in a full frequency range with a predetermined recognizable human voice frequency range. In atypical application, the audio signals in a full frequency range can be filtered by a band pass filter, and the band pass filter is used to allow audio signals of the recognizable human voice frequency range to pass.

As shown in the method of Fig.10, by arrangement of the position of the loudspeakers, sound signals played by each loudspeaker transmit to the ears at the same time. In addition, the sound signals reach to the ears at the same time by adjusting an amplitude of the sound signals in frequency domain. In addition, a voice position of the human voice felt by passengers can be corrected by controlling the other half number of loudspeakers to play the human voice signals. Overall, the vehicle sound system creates a better sound field effect for passengers by adjusting time and volume when sound reaches ears of the passengers, and by controlling the other half number of loudspeakers to play the human voice signals, and by alternative manners.

### Third embodiment

Referring to FIG.11, FIG.11 is a schematic structural diagram of a vehicle sound system, according to another embodiment of the disclosure. As shown in FIG.11, the vehicle sound system includes a predetermined number of loudspeakers, a second number of loudspeakers 1101, and a first number of loudspeakers 1102.

The predetermined number of loudspeakers are oriented towards a seat of a vehicle.

The second number of loudspeakers 1101 are used to play audio signals in a full frequency range.

The first number of loudspeakers 1102 are used to play human voice signals of a recognizable human voice frequency range. The first number of loudspeakers 1102are arranged at the middle portion of the vehicle. Sound directions of the first number of loudspeakers are oriented towards doors of the vehicle respectively, anda sum of the first number and the secondnumber is the predetermined number.

Optionally, the predetermined number of loudspeakers are arranged symmetrically about a seat. In this manner, a layout of the predetermined number of loudspeakers is more beautiful. At the sametime, the predetermined number of loudspeakers are spaced from the seat with a same distance. In this manner, audio signals played by each loudspeaker reach the ears at the same time.

Optionally, as shown in FIG.11, the vehicle sound system further includes a filtering unit 1103.

The filtering unit 1103 is used to filter audio signals with the recognizable human voice frequency range to obtain human voice signals of a recognizable human voice frequency range. In this embodiment, the first number of loudspeakers 1102 are used to play the human voice signals filtered by the filtering unit 1103.

The vehicle sound system may further include a power amplifying unit 1104. The power amplifying unit 1104 is used to receive original audio source signals, and to amplify power of the original audio source signals, thereby driving the loudspeakers to play. In this embodiment, the power amplifying unit 1104 amplifies the original audio source signals to obtain the audio signals. In addition, the power amplifying unit 1104 drives the second number of loudspeakers 1101 to play the audio signals, and at the same time transmits the audio signals to the filtering unit 1103. The filtering unit 1103 filters the audio signals to obtain the human voice signals. In addition, the filtering unit 1103 drive the first number of loudspeakers 1102 to play the human voice signals.

Optionally, as shown in FIG.11, the vehicle sound system further includes an ear identifying unit 1105, a determining unit 1106, and an adjusting unit 1107.

The ear identifying unit 1105 is used to identify the position of ears of a user on a seat. In this embodiment the ear identifying unit 1105 includes a capturing subunit 11051 and an identifying subunit 11052. The capturing subunit 11051 is used to control a camera to capture a face image of the user on the seat. The identifying subunit 11052 is used to identify the position of the ears according to the face image.

The determining unit 1106 is used to determine, according to the position of the ears identified by the ear identifying unit 1105, a relative distance between each loudspeaker of at least two loudspeakers and the position of the ears.

The adjusting unit 1107 is used to adjust, according to the relative distance determined by the determining unit 1106, an amplitude of the audio signals and the human voice signals to have a same volume when reaching the ears of the user.

As an optional implementation manner, the adjusting unit 1107 may adjust, according to the relative distance determined by the determining unit 1106, the amplitude of each original audio source signal in frequency domain. Each original audio source signal corresponds to a loudspeaker. After adjusting the amplitude, the adjusting unit 1107 transmits each audio signal to the power amplifying unit 1104. The power amplifying unit 1104 amplifies power of each audio signal to obtain a number of audio signals in a full frequency range, and transmits s each audio signals in a full frequency range to the second number of loudspeakers 1101 or the filtering unit 1103.

The vehicle sound system shown in FIG.11 can create better sound filed effects for passengers by adjusting time and volume when sound reaches ears of the passengers, and by controlling the second number of loudspeakers to play the human voice signals.

The embodiments of the disclosure provide a computer-readable storage medium. The computer-readable storage medium stores a computer program. The computer program tends to be configured to perform an audio play method provided by the embodiments of the disclosure.

The embodiments of the disclosure provide a computer program product. The computer program product includes a non-transitory computer-readable storage medium storing the computer program. And the computer program tends to be configured to perform the audio play method provided by the embodiments of the disclosure.

It should be understood that "one embodiment" or "an embodiment" in this description means that features, structures, or characteristics related to the embodiments is included in at least one embodiment ofthe disclosure. Therefore, "in one embodiment" or "in an embodiment" in this description do not necessarily refer to the same embodiment. In addition, the specific features, structures or characteristics may be combined in any suitable manner in one or more embodiments. Those skilled in the art should know that the embodiments described in this description are optional embodiments. Those skilled in the art should also know that actions and modules in this description are not necessarily required.

In the embodiments of the disclosure, it should be understood that size of a sequence number of each process does not mean a necessary performing sequence. The performing sequence of each process should be determined by function and internal logic of each process, but should not limit the performing process in the embodiments of the disclosure.

Units described as separate components may or may not be physically separated. And the components displayed as units may or may not be physical units, and may be located in one place or distributed on a number of network units. Some or all of the units tend to be selected according to actual needs to achieve the purpose of the solution of the embodiments.

In addition, each functional unit in the embodiments of the disclosure may be integrated into one processing unit. Or each functional unit may exist alone physically Or two or more functional units may be integrated into one unit. And integrated unit can be implemented in a form of a hardware functional unit or a form of a software functional unit.

When the integrated unit above is implemented in the form of the software functional unit and sold or used as an independent product, it can be stored in a computer-accessible memory. The technical solution of the closure, or parts contributing to the art, or parts of the technical solution, or all the technical solution may be embodied in the form of a computer software product. The computer software product is stored in a memory. And the computer software product includes several requests to make a computer device (the computer device may be a personal computer, a server or a network device, etc., specifically a processor in the computer device) perform parts or all of the steps of the audio play method provided by the embodiments of the disclosure.

Those of ordinary skill in this art should understand that all or parts of the steps in the audio play methods in the embodiments can be completed by a program instructing relevant hardware. The program can be stored in the computer-readable storage medium. The storage medium includes Read-only Memory (ROM), Random Access Memory (RAM), Programmable Read-only Memory (PROM), Erasable Programmable Read Only Memory (EPROM), One-time Programmable Read-Only Memory (OTPROM), Electronically-Erasable Programmable Read-Only Memory (EEPROM), Compact Disc Read-Only Memory (CD-ROM), Compact Disc Read-Only Memory (CD-ROM) or other optical disk storage, magnetic disk storage, tape storage, or any other computer-readable medium that can be configured to carry or store data.

The above description introduces in detail a vehicle sound system and an audio play method provided by the embodiments of the disclosure. Specific examples are used in this essay to explain the principles and performing manners ofthe disclosure. The description of the above embodiments is merely used to help understand the method and the core ideas of the disclosure. At the same time, for those of ordinary skill in the art, according to the ideas of the disclosure, there will be changes in the performing manners and scopes of applications. In summary, the content of this essay should not be understood as limiting the disclosure.

## Claims

1. An audio play method, applied to a vehicle sound system, the vehicle sound system comprising a predetermined number of loudspeakers, each of the loudspeakers being oriented toward a seat of the vehicle, the method comprising:
controlling a first number of loudspeakers, from the predetermined number of loudspeakers, to play human voice signals of a recognizable human voice frequency range, the first number of loudspeakers being arranged at a middle portion of the vehicle while sound directions of the first number of loudspeakers being oriented toward a door of the vehicle; and
controlling a second number of loudspeakers, from the predetermined number of loudspeakers, to play audio signals in a full frequency range, wherein a sum of the first number and the second number is the predetermined number.

2. The audio play method of claim 1, wherein the predetermined number of loudspeakers are symmetrically arranged about the seat and are spaced from the seat with a same distance.

3. The audio play method of claim 1, wherein controlling a first number of loudspeakers to play human voice signals comprises:
filtering the audio signals in the full frequency range with the recognizable human voice frequency range,
thereby obtaining the human voice signals; and
controlling the first number of loudspeakers to play the human voice signals.

4. The audio play method of any of claims 1-3, further comprising:
identifying the po sition of the ears of a user on the seat;
determining, according to the position of the ears, a relative distance between each of the predetermined number of loudspeakers and the position of the ears; and
adjusting, according to the relative distance, an amplitude of the audio signals and the human voice signals in frequency domain, thereby enabling the audio signals and the human voice signals to have a same volume when reaching the ears of the user.

5. The audio play method of claim 4, wherein identifying the position of the ears of the user on the seat comprises:
controlling a camera to capture a face image of the user on the seat, and identifying the position of the ears according to the face image.

6. Avehicle sound system, comprising:
a predetermined number of loudspeakers, each of the predetermined number of loudspeakers being oriented toward a seat of the vehicle,
wherein the predetermined number of loudspeakers comprising a first number of loudspeakers and a second number of loudspeakers, the first number of loudspeakers are configured for playing human voice signals of a recognizable human voice frequency range, and the first number of loudspeakers are arranged at a middle portion of the vehicle while sound directions of the first number of loudspeakers are oriented toward a door of the vehicle;
wherein the second number of loudspeakers are configured for playing audio signals in a full frequency range, and a sum of the first number and the second number is the predetermined number.

7. The vehicle sound system of claim 6, wherein the predetermined number of loudspeakers are symmetrically arranged about the seat and are spaced from the seat with a same distance.

8. The vehicle sound system of claim 6, further comprising:
a filtering unit, configured for filtering the audio signals in the full frequency range with the recognizable human voice frequency range, thereby obtaining the human voice signals;
wherein the first number of loudspeakers are specifically configured for playing the human voice signals.

9. The vehicle sound system of any of claims 6-8, further comprising:
an ear identifying unit, configured for identifying the position ofthe ears of a user on the seat;
a determining unit, configured for determining, according to the position of the ears, a relative distance between each of the predeterm inednumber of loudspeakers andthe position of the ears; and
an adjusting unit, configured for adjusting, according to the relative distance, an amplitude of the audio signals and the human voice signals in frequency domain, thereby enabling the audio signals and the human voice signals to have a same volume when reaching the ears of the user.

10. The vehicle sound system of claim 9, wherein the ear identifying unit comprises:
a capturing subunit, configured for controlling a camera to capture a face image of the user on the seat;
and
an identifying subunit, configured for identifying the position of the ears accordingto the face image.
